# EUROPEAN PATENT SPECIFICATION

(11) **EP 3 604 037 B1**
(45) Date of publication and mention of the grant of the patent: **13.05.2020**
(21) Application number: 19168083.4
(22) Date of filing: 09.04.2019
(51) Int. Cl.: B60R 3/02

(54) **RETRACTABLE STEP**
EINFAHRBARE STUFE
MARCHEPIED RÉTRACTABLE

(30) Priority: 01.08.2018 IT 201800007717
(43) Date of publication of application: 05.02.2020
(73) Proprietor: Project 2000 S.r.l., 50041 Calenzano (FI) (IT)
(72) Inventor: NARDINI, Davide, 50041 Calenzano (FI) (IT)
(74) Representative: Mincone, Antimo

(56) References cited:
- CH-A5- 661 102
- DE-A1- 10 113 136
- US-A1- 2013 154 230

## Description

The present invention relates to a retractable step for recreational vehicles such as campers and the like.

In particular, a retractable step according to the present invention is of the type which can be mounted at an access door of a recreational vehicle and which can assume an extracted configuration of use and a retracted rest configuration. A retractable step of this type is disclosed in DE10113136 US 2013/0154230 A1 discloses a retractable step according to the preamble of claim 1.

The main object of the present invention is to provide a retractable step for recreational vehicles that can be configured according to different sizes and, at the same time, can be easily assembled.

This result has been achieved, in accordance with the present invention, by providing a retractable step having the features indicated in claim 1. Other features of the present invention are the subject of the dependent claims.

According to the present invention, it is possible to use different materials to make the crosspieces connecting the step operating levers to each other and respectively to realize the screw connection between the same levers and the crosspieces. For example, said crosspieces can be made of aluminium while the screw insertion plates can be made of steel, thus providing a particularly efficient connection without substantial increase in weight of the step.

These and further advantages and characteristics of the present invention will be more evident to any person skilled in the art, thanks to the following description and to the attached drawings, provided as an example but not to be considered in a limiting sense, in which:

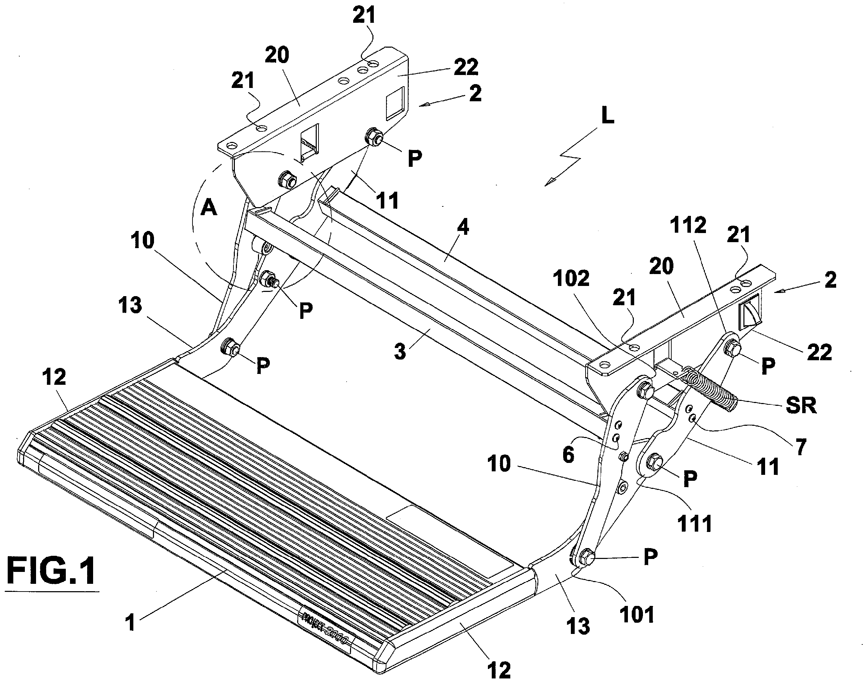

- Fig.1 is a perspective view of a step in accordance with the present invention, with some parts omitted to better show other parts, the step being in the extraction configuration;

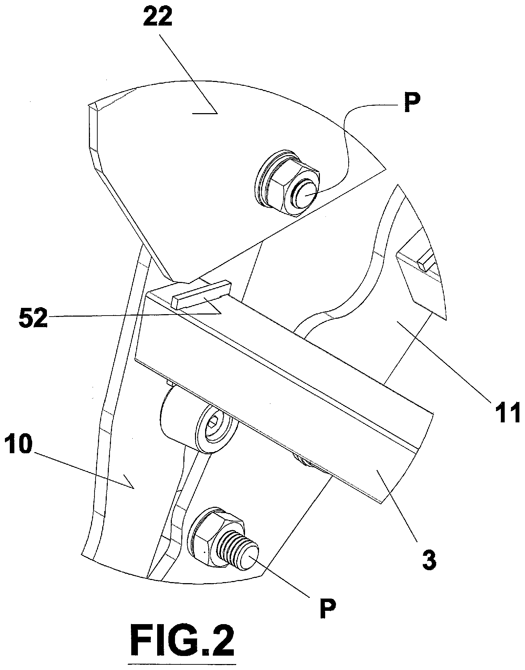

- Fig.2 is an enlarged view of detail "A" of Fig.1;
- Fig.3A, in which an electric motor (EM) which controls the opening and closing of the step is also shown, shows the step of Fig.1 in a retracted configuration;
- Fig.3B is similar to Fig.3A but it shows the step of Fig.1 in the extracted configuration;

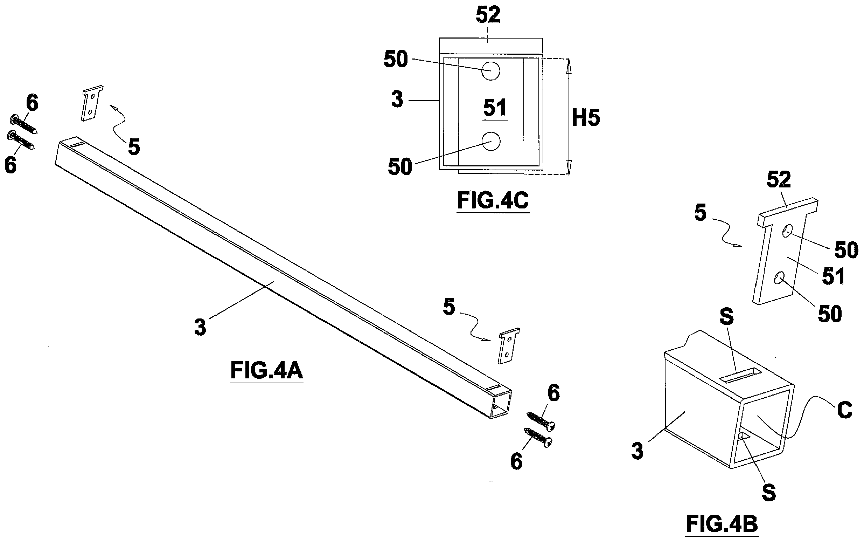

- Fig.4A represents an exploded perspective view of a crosspiece (3) and the respective plates (5);
- Fig.4B is an enlarged detail of Fig.4A;
- Fig.4C schematically represents a plate (5) inserted in a crosspiece (3);
- Fig.5 schematically represents a phase of connection of the step actuation levers to the respective crosspieces.

Reduced to its essential structure and with reference to the embodiment illustrated in the attached drawings, a retractable step (L) according to the present invention comprises:
- a step tread (1);
- two pairs of levers (10, 11) each of which has a front end (101, 111) hinged on a corresponding rear extension (13) of a side (12) of the step tread (1), each pair of levers being formed by a front lever (10) and a rear lever (11);
- a fixing structure for fixing the step to the frame of a vehicle, with two metal plates (2) on each of which the rear end (102, 112) of each of said levers (10, 11) is hinged;
- a first crosspiece (3) that connects the front levers (10);
- a second crosspiece (4) that connects the rear levers (11);
- screw means (6) for constraining the front levers (10) to the first crosspiece (3);
- screw means (7) for constraining the rear levers (11) to the second crosspiece (4).

With reference to the embodiment shown in the attached drawings, each of said plates (2) has an upper horizontal edge (20) which allows it to be anchored to the vehicle frame by means of screws (not shown) passing through corresponding holes (21) provided in the same edge (20), and an underlying vertical surface (22) on which the rear ends (102, 112) of the levers (10, 11) are hinged.

Moreover, with reference to the embodiment example shown in the drawings, each of said levers (10, 11) is connected to the step tread (1) on one side, and to the fixing structure (2) on the other side, by means of pins (P ) oriented orthogonally to the same levers (10, 11); each pin (P) constitutes a connecting hinge of a respective lever (10, 11) to the step tread (1) or to the fixing structure (2). The front ends (111) of the rear levers (11) are hinged on said extensions (13) in a rearward position with respect to the front ends (101) of the front levers (10). Similarly, the rear ends (112) of the rear levers (11) are hinged on the plates (2) in a rearward position with respect to the rear ends (102) of the front levers (10).

In practice, the step tread (1) is connected to the fixing structure (2) by means of the levers (10, 11); the crosspiece (3) connects the front levers (10) with each other; and the crosspiece (4) connects the rear levers (11) with each other.

The shape of the levers (10, 11) and their connection to the step tread (1) and to the fixing structure (2) are known per se.

The step tread (1) can assume an extracted configuration and a retracted configuration.

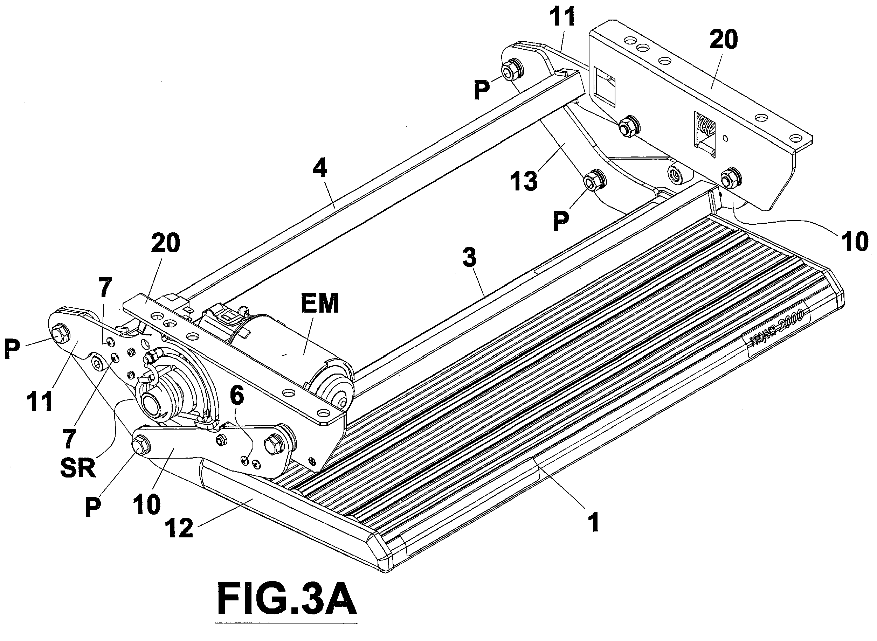

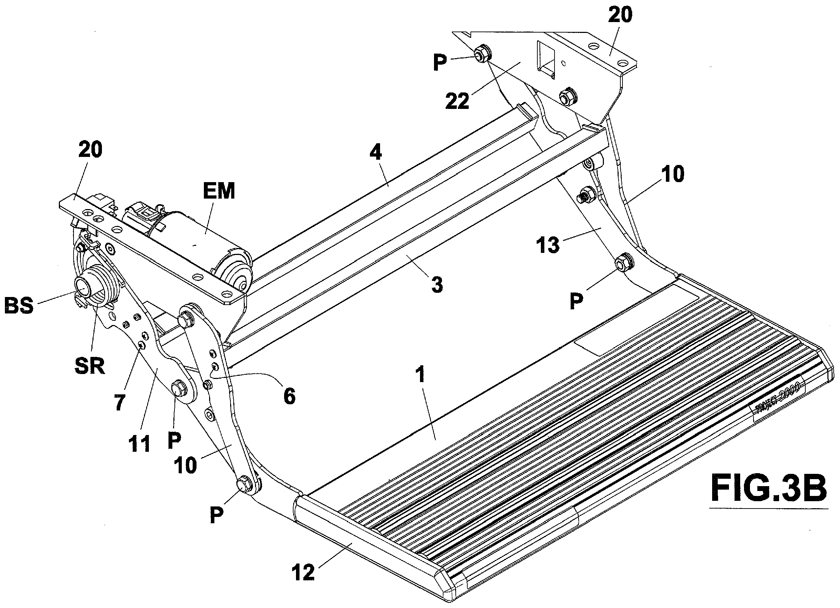

In a per se known manner, the extraction and the retraction of the step tread, i.e. the opening and closing of the step (L), can be controlled by an electric motor (EM) acting on one of the rear levers (11). According to the examples shown in Figs.3A and 3B, the electric motor (EM) acts on the rear lever (11) of the right side of the step. The motor (EM) is connected to a gearbox whose shaft (ES) is connected with said rear lever (11). Therefore, by rotating the shaft (ES) in the clockwise or anticlockwise direction, the levers (10, 11) are rotated around the respective pins (P) and, in this way, the step (L) is opened or closed.

The step (L) is normally closed. A spring (SR) is positioned between each plate (2) and an appendix of the respective rear lever (11) to prevent spontaneous opening of the step (L).

The resistance of springs (SR) is overcome by the motor (EM) when the latter controls the opening of step (L). It is understood, however, that the present invention is not limited to a particular mode of controlling the extraction and retraction of the step tread (1), i.e. to a particular mode of opening and closing of the step (L).

According to the present invention, each of said crosspieces (3, 4) is hollow and has a pair of opposed slots (S), at a predetermined distance from each of its side ends. In each of said slots (S) a metal plate (5) can be inserted, said plate having two through holes (50).

Each plate (5) has a surface (51) that can be inserted in a slot (S). The holes (50) are formed on said surface (51).

Preferably, each plate (5) is "T"-shaped so as to have a head (52) which remains outside the slot (S) in which the plate itself is inserted. The head (52) facilitates the positioning of the plate (5) forming a stop element of the plate itself when it is fully inserted into the slot (S) to which it is intended.

The height (H5) of the surface (51) is such that the plate (5) passes through both the respective opposing slots (S).. In other words, each plate (5) crosses the respective crosspiece (3, 4) from side to side, transversally to the length of the crosspiece itself.

When a plate (5) is inserted through the two opposite slots (S) of one side of a crosspiece (3, 4), the respective holes (50) are inside the cavity (C) of the crosspiece.

Preferably, the crosspieces (3, 4) have a square or rectangular transverse profile.

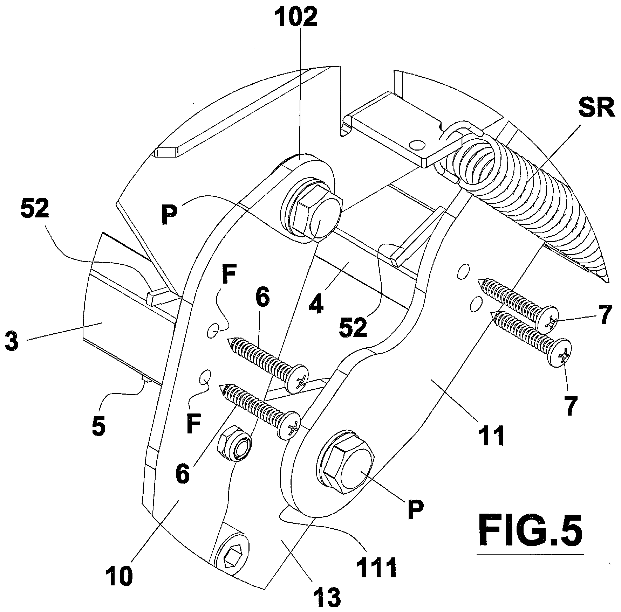

The procedure for connecting a front lever (10) to one end of the front crosspiece (3) is described below, referring to Fig. 5. The connection of the rear levers (11) to the crosspiece (4) and the connection of the other front lever (10) to the other side of the crosspiece (3) are provided in the same way. In Fig.5 the screws connecting the rear levers (11) to the crosspiece (4) are denoted by the reference "7".

Once a plate (5) has been inserted in the corresponding slots (S) of the crosspiece (3), the screws (6) are used by making them to pass through two holes (F) provided on the lever (10). Said screws are then screwed into the holes (50) of the plate (5), thus obtaining the clamping of the lever (10) on the corresponding end of the crosspiece (3).

In practice, each crosspiece (3, 4) is provided, at both the right and left ends, with a plate (5) passing through two corresponding opposed slots (S) and, therefore, each crosspiece can be connected to a respective lever (10, 11) by means of the screws (6, 7) screwed into the holes (50) presented by the plate (5). With reference to the accompanying drawings, the screws (6, 7) are oriented transversely to the levers (10, 11), i.e. they are oriented transversely to the plates (5).

Therefore, the connection of the crosspieces (3, 4) to the levers (10, 11) can be carried out easily and quickly.

As previously said, the crosspieces (3, 4) can be made of aluminium while the plates (5) can be made of steel, providing a particularly effective connection without substantial increase in weight of the step.

Thus, a retractable step for recreational vehicles in accordance with the present invention comprises a step tread (1), a plurality of levers (10, 11) each of which has a front end (101, 111) hinged on one side of the step tread (1), and a fixing structure (2) on which a rear end (102, 112) of each of said levers (10, 11) is hinged; said levers are front levers (10) and the rear levers (11) in relation to their position with respect to the step tread(1); a front crosspiece (3) connects the front levers (10); a rear crosspiece (4) connects the rear levers (11); first screw means (6) constrain the front levers (10) to the front crosspiece (3); second screw means (7) constrain the rear levers (11) to the rear crosspiece (4); each of said crosspieces (3, 4) is hollow and has a pair of opposed slots (S), at a predetermined distance from each of its side ends; in each of said slots (S) a plate (5) is inserted which has a predetermined number of through holes (50); each plate (5) has a surface (51) which can be inserted into a slot (S); said holes (50) are formed on said surface (51); and said screw means (6, 7) engage said holes (50).

It is understood that the plates (5) may have the holes (50) vertically aligned, as shown in the drawings, or misaligned. Furthermore, the number of holes (50) can be different from two.

In practice, the details of execution may in any case vary in an equivalent manner as regards the individual elements described and illustrated, without thereby departing from the scope of the solution idea adopted and therefore remaining within the limits of protection as defined by the appended claims.

## Claims

1. Retractable step for recreational vehicles, comprising a step tread (1), a plurality of levers (10, 11) each of which has a front end (101, 111) hinged on one side of the step tread (1), and a fixing structure (2) to which a rear end (102, 112) of each of said levers (10, 11) is hinged, wherein said levers are front levers (10) and rear levers (11) in relation to their position with respect to the step tread (1), wherein a front crosspiece (3) connects the front levers (10) with each other, wherein a rear crosspiece (4) connects the rear levers (11) with each other, wherein first screw means (6) constrain the front levers (10) to the front crosspiece (3), and wherein second screw means (7) constrain the rear levers (11) to the rear crosspiece (4), **characterized in that** each of said crosspieces (3, 4) is hollow and has a pair of opposing slots (S) at a predetermined distance from each of its side ends, by the fact that in each of said slots (S) is inserted a plate (5) having a predetermined number of through holes (50), **in that** each plate (5) has a surface (51) insertable in a slot (S), **in that** said holes (50) are formed on said surface (51) and **in that** said screw means (6, 7) engage said holes (50) .

2. Retractable step according to claim 1 **characterized in that** said levers (10, 11) are driven by an electric motor (EM).

3. Retractable step according to claim 1, **characterized in that** said levers (10, 11) are two pairs of front levers (10) and rear levers (11).

4. Retractable step according to claim 1, **characterized in that** said fixing structure (2) comprises two plates each of which has an upper fixing edge (20) and an underlying surface (22) on which the rear ends (102, 112) of the levers (10, 11) are hinged.

5. Retractable step according to claim 1 **characterized in that** each plate (5) is "T"-shaped.

6. Retractable step according to claim 1 **characterized in that** each plate (5) has two holes (50) on said surface (51).

7. Retractable step according to claim 1 **characterized in that** said crosspieces (3, 4) have a square or rectangular transverse profile.

8. Retractable step according to claim 1, **characterized in that** said crosspieces (3, 4) are made of aluminium and said plates (5) are made of steel.

## Patentansprüche

1. Einfahrbare Stufe für Wohnmobile, umfassend eine Trittstufe (1), eine Vielzahl von Hebeln (10, 11), jeder mit einem vorderen Ende (101, 111), das an einer Seite der Trittstufe (1) angelenkt ist, und einer Befestigungsstruktur (2), an der ein hinteres Ende (102, 112) jedes der Hebel (10, 11) angelenkt ist, wobei die Hebel vordere Hebel (10) und hintere Hebel (11) in Relation zu ihrer Position in Bezug auf die Trittstufe (1) sind, wobei eine vordere Quertraverse (3) die vorderen Hebel (10) miteinander verbindet, wobei eine hintere Quertraverse (4) die hinteren Hebel (11) miteinander verbindet, wobei erste Schraubenmittel (6) die vorderen Hebel (10) an der vorderen Quertraverse (3) halten und wobei zweite Schraubenmittel (7) die hinteren Hebel (11) an der hinteren Quertraverse (4) halten, **dadurch gekennzeichnet, dass** jede der Quertraversen (3, 4) hohl ist und ein Paar gegenüberliegender Schlitze (S) mit einem vorbestimmten Abstand zu jedem ihrer Seitenenden aufweist, aufgrund der Tatsache, dass in jedem der Schlitze (S) eine Platte (5) mit einer vorbestimmten Anzahl von Durchgangslöchern (50) eingesetzt ist, dadurch, dass jede Platte (5) eine Oberfläche (51) aufweist, die in einen Schlitz (S) einsetzbar ist, dadurch, dass die Löcher (50) auf der Oberfläche (51) gebildet sind und dadurch, dass die Schraubenmittel (6, 7) mit den Löchern (50) in Eingriff sind.

2. Einfahrbare Stufe nach Anspruch 1, **dadurch gekennzeichnet, dass** die Hebel (10, 11) durch einen Elektromotor (EM) angetrieben werden.

3. Einfahrbare Stufe nach Anspruch 1, **dadurch gekennzeichnet, dass** die Hebel (10, 11) zwei Paare aus vorderen Hebeln (10) und hinteren Hebeln (11) sind.

4. Einfahrbare Stufe nach Anspruch 1, **dadurch gekennzeichnet, dass** die Befestigungsstruktur (2) zwei Platten umfasst, von welchen jede einer obere Befestigungskante (20) und eine darunter liegende Oberfläche (22) aufweist, auf der die hinteren Enden (102, 112) der Hebel (10, 11) angelenkt sind.

5. Einfahrbare Stufe nach Anspruch 1, **dadurch gekennzeichnet, dass** jede Platte (5) "T"-förmig ist.

6. Einfahrbare Stufe nach Anspruch 1, **dadurch gekennzeichnet, dass** jede Platte (5)zwei Löcher (50) auf der Oberfläche (51) aufweist.

7. Einfahrbare Stufe nach Anspruch 1, **dadurch gekennzeichnet, dass** die Quertraversen (3, 4) ein quadratisches oder rechteckiges Querprofil aufweisen.

8. Einfahrbare Stufe nach Anspruch 1, **dadurch gekennzeichnet, dass** die Quertraversen (3, 4) aus Aluminium hergestellt sind und die Platten (5) aus Stahl hergestellt sind.

## Revendications

1. Echelle escamotable applicable aux véhicules récréatifs, comprenante une étape (1), une pluralité de leviers (10, 11) dont chacun à un'extrémité antérieure (101, 111) articulée sur un coté de l'étape (1), et une structure d'encrage (2) sur laquelle est articulée une extrémité postérieure (102,112) de chacun desdits leviers (10, 11), où lesdits leviers sont subdivisés entre leviers antérieurs (10) et leviers postérieurs (11) en relation à leur position par rapport à l'étape (1), où une traverse antérieure (3) relie les leviers antérieurs (10) les uns aux autres, où une traverse postérieure (4) relie les leviers postérieurs (11) les un aux autres, où des premiers moyens à vis (6) engagent les leviers antérieurs (10) à la traverse antérieure (3), et où des seconds moyens à vis (7) engagent les leviers postérieurs (11) à la traverse postérieure (4), **caractérisée en ce que** chacune desdites traverses (3, 4) est cave et présente une paire de fentes (S) opposées à une distance prédéteminée de chacune des ses extrémitées latèrales, **en ce que** dans chacune desdites fentes (S) est inserée une plaque (5) laquelle présente un nombre prédéteminté de trous passants (50), **en ce que** chaque plaque (5) présente une surface (51) insérable dans une fente (S), **en ce que** lesdits trous (50) sont formés sur ladite surface (51) et **en ce que** lesdits moyens à vis (6, 7) engagent lesdits trous (50).

2. Echelle escamotable selon la revendication 1 **caractérisée en ce que** lesdits leviers (10,11) sont actionnés par un moteur électrique (M).

3. Echelle escamotable selon la revendication 1 **caractérisée en ce que** lesdits leviers (10,11) sont deux paires de leviers antérieurs (10) et leviers postérieurs (11).

4. Echelle escamotable selon la revendication 1 **caractérisée en ce que** ladite structure d'ancrage (2) comprend duex plaques mètalliques chacune des quelles a un bord d'ancrage supérieur (20) et une surface sous-jacente (22) sur laquelle sont articulées les extrémités postérieures (102, 112) des leviers (10,11).

5. Echelle escamotable selon la revendication 1 **caractérisée en ce que** chaque plaque (5) est en forme de "T".

6. Eschelle escamotable selon la revendication 1 **caractérisée en ce que** chaque plaque (5) présente deux trous (50) sur ladite surface (51).

7. Echelle escamotable selon la revendication 1 **caractérisée en ce que** lesdites traverse (3, 4) ont un profil transversal carré ou rectangulaire.

8. Echelle escamotable selon la revendication 1 **caractérisée en ce que** lesdites traverses (3, 4) sont en aluminium et lesdites plaques (5) sont en acier.
